# NEUE EUROPÄISCHE PATENTSCHRIFT

(11) **EP 3 114 018 B2**
(45) Veröffentlichungstag und Bekanntmachung des Hinweises auf die Entscheidung über den Einspruch: **24.12.2025**
(45) Hinweis auf die Patenterteilung: 21.04.2021
(21) Anmeldenummer: 15713137.6
(22) Anmeldetag: 06.03.2015
(51) Int. Cl.: B62D 65/18

(54) **FERTIGUNGSANLAGE, TRANSPORTSYSTEM UND VERFAHREN**
MANUFACTURING PLANT, CONVEYING SYSTEM AND METHOD
INSTALLATION DE PRODUCTION, SYSTÈME DE TRANSPORT ET PROCÉDÉ

(30) Priorität: 06.03.2014 DE 202014101003 U
(43) Veröffentlichungstag der Anmeldung: 11.01.2017
(73) Patentinhaber: KUKA Systems GmbH, 86165 Augsburg (DE)
(72) Erfinder: THORWARTH, Paul, 86154 Augsburg (DE)
(74) Vertreter: Ernicke, Klaus Stefan
(86) Internationale Anmeldenummer: PCT/EP2015/054707
(87) Internationale Veröffentlichungsnummer: WO 2015/132379

(56) Entgegenhaltungen:
- EP-A1- 2 340 982
- EP-A2- 0 140 216
- WO-A1-2013/168706
- CH-A- 548 334
- DE-A1- 102007 009 329
- DE-A1- 102009 058 125
- DE-A1- 3 614 165
- DE-U1- 202005 003 913
- DE-U1- 202007 002 365
- DE-U1- 202007 015 654

## Beschreibung

Die Erfindung betrifft eine Fertigungsanlage, ein Transportsystem und ein Verfahren mit den Merkmalen im Oberbegriff der Verfahrens- und Vorrichtungshauptansprüche.

Aus der Praxis sind Fertigungsanlagen in Form von Robotergärten bekannt, wobei eine Reihe von einzelnen Roboterstationen oder Roboterzellen in einer Reihe angeordnet und untereinander in Serie durch ein Transportsystem mit direkter stationsweiser Werkstückübergabe fest verkettet sind Eine Fertigungsanlage mit dem Merkmalen der Präambel von Anspruch 1 ist aus der WO 2013/168706 bekannt.

Es ist Aufgabe der vorliegenden Erfindung, eine verbesserte Fertigungstechnik aufzuzeigen.

Die Erfindung löst diese Aufgabe mit den Merkmalen der Verfahrens- und Vorrichtungshauptansprüche.

Die beanspruchte Fertigungstechnik, d.h. die Fertigungsanlage und das Fertigungsverfahren, bieten eine höhere Flexibilität für die in einer Fertigungsanlage durchzuführenden Prozesse und für die Transportlogistik. Auch der Aufwand für die Erstellung und Anpassung einer Fertigungsanlage und des Transportsystems an die verschiedenen in den Stationen durchzuführenden Bearbeitungsprozesse kann signifikant vermindert werden. Außerdem ergeben sich Vorteile für eine bessere und flexiblere Verkettung von Fertigungsstationen untereinander und für den Material- oder Werkstückfluss.

Für die Flexibilisierung ist es von Vorteil, mehrere Fertigungsstationen gemeinsam an einen Transportweg anzubinden und sie auf diese Weise flexibel mit einem auf dem Transportweg beweglichen automatischen Transportmittel ansteuern zu können. Ein automatisches Transportmittel kann fahrerlos sowie programm- und ferngesteuert sein. Mit einer Änderung der Fertigungsprozesse und der Material- und Werkstückflüsse kann auch das Transportsystem schnell, einfach und ohne übermäßigen Aufwand angepasst werden.

Das Transportsystem weist ein Transportliniensystem auf, in dem die automatischen Transportmittel liniengebunden verkehren. Besonders günstig ist eine Gliederung des Transportliniensystems in mehrere ringförmig geschlossene Transportlinien, in denen jeweils ein oder mehrere Transportmittel liniengebunden und bevorzugt in einem Kreislauf verkehren. Diese Gestaltungsvarianten verringern jeweils den Programmier- und Steueraufwand für die automatischen Transportmittel. Die Transportmittel fahren auf ihrer Transportlinie nur noch einen Teil der insgesamt vorhandenen Fertigungsstationen an. Dies verkürzt außerdem ihre Fahrwege und sorgt für eine bessere und schnellere Verfügbarkeit eines Transportmittels für den jeweiligen Transportjob.

Besonders günstig ist die Ausbildung von Fertigungsstationen mit getrennten Eingabe- und Ausgabeschnittstellen, an denen jeweils eine andere Transportlinie angeschlossen ist. Hierdurch kann die Zufuhr und Abfuhr von Werkstücken auf unterschiedlichen Transportlinien erfolgen. Die Transportlinien können außerdem über die Fertigungsstationen miteinander im Material- und Werkstückfluss verkettet werden.

Besondere Vorteile bestehen bei der Ausbildung der Fertigungsanlage mit einer Stationsmatrix, in der die einzelnen Fertigungsstationen flexibel einsetzbar und programmierbar sind. Jede Fertigungsstation ist an ein vorzugsweise verzweigtes Transportwegenetz angebunden. Dies erlaubt eine flexible Gestaltung der Transportlinien und ihrer Zuordnung zu den vorhandenen Transportwegen. Die Fertigungsanlage insgesamt ist dadurch hoch flexibel und kann dadurch schnell und einfach bei Prozessänderungen angepasst werden. Vorzugsweise wird eine solche Fertigungsanlage im Rohbau von Fahrzeugkarosserien eingesetzt. Die hohe Flexibilität ist besonders wichtig für die im Fahrzeugbau häufig vorkommenden Fertigungen von unterschiedlichen Fahrzeug- und Karosserietypen sowie deren Karosserieteilen in einem freien Mix. Auch eine Typänderung oder ein Typwechsel sind mit der beanspruchten Fertigungstechnik schnell, einfach und wirtschaftlich umsetzbar.

Zudem können verschiedene Fertigungsprozesse parallel in der Fertigungsanlage ablaufen. Ein Fertigungsprozess kann mehrstufig und stationsübergreifend sein. Mehrere Fertigungsprozesse können aneinander anschließen und zu einem Fertigungsablauf verkettet sein. Über das Transportliniensystem ist eine prozesstechnische Verkettung der Fertigungsstationen untereinander und mit einer Bauteilversorgung (28) möglich. Bei einem stationsübergreifenden Fertigungsprozess kann eine Transportlinie die beteiligten Fertigungsstationen prozesstechnisch verketten. Für einen Fertigungsablauf können mehrere prozessbezogene Transportlinien miteinander verkettet werden.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: eine schematische Ansicht einer Fertigungsanlage mit mehreren Fertigungsstationen und einem Transportsystem,
- Figur 2:: eine ausschnittsweise Detailansicht der Fertigungsanlage und eines Transportliniensystems mit mehreren automatischen Transportmitteln und
- Figur 3:: eine schematische Ansicht einer Fertigungsstation.

Die Erfindung betrifft eine Fertigungsanlage (1) sowie ein Fertigungsverfahren. Sie betrifft ferner ein in der Fertigungsanlage (1) angeordnetes Transportsystem (9) und ein Transportverfahren.

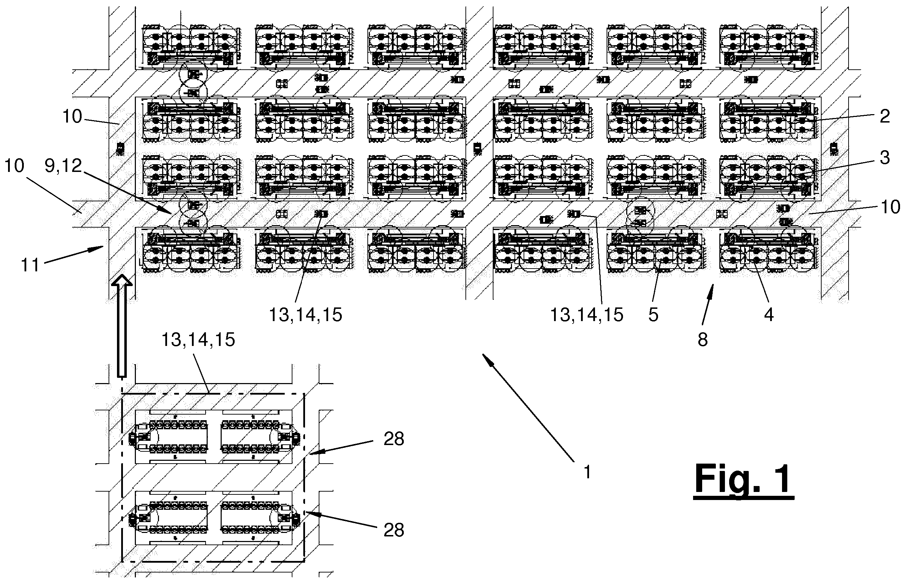

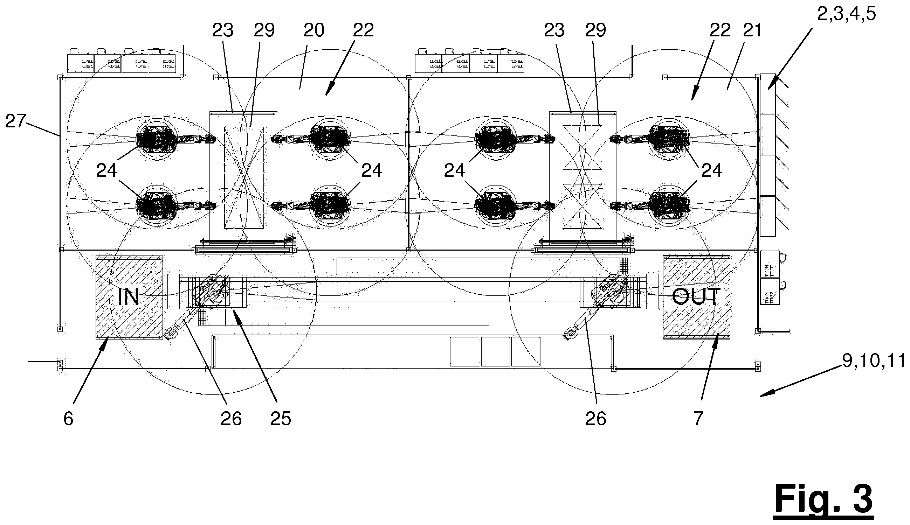

Figur 1 zeigt eine Fertigungsanlage (1) für Werkstücke (29) (vgl. Figur 3). Die Werkstücke (29) können von beliebiger Art und Größe sein. Vorzugsweise handelt es sich um Rohkarosserieteile aus Metallblech oder anderen Werkstoffen für Fahrzeuge. Die Fertigungsanlage (1) ist in den gezeigten Ausführungsbeispielen als Rohbauanlage ausgebildet.

Die Fertigungsanlage (1) weist mehrere Fertigungsstationen (2-5) und ein Transportsystem (9) zum Transport der Werkstücke (29) innerhalb der Fertigungsanlage (1) und zwischen den Fertigungsstationen (2-5) auf. Die Fertigungsanlage (1) kann außerdem noch weitere Stationen, z.B. die in Figur 1 angedeuteten Stationen zur Bauteilversorgung (28) aufweisen, die ebenfalls an das Transportsystem (9) angeschlossen sind. Von hier können einzelne Bauteile für die Fertigungsabläufe und die Fertigungsprozesse in den Fertigungsstationen (2-5) geliefert werden.

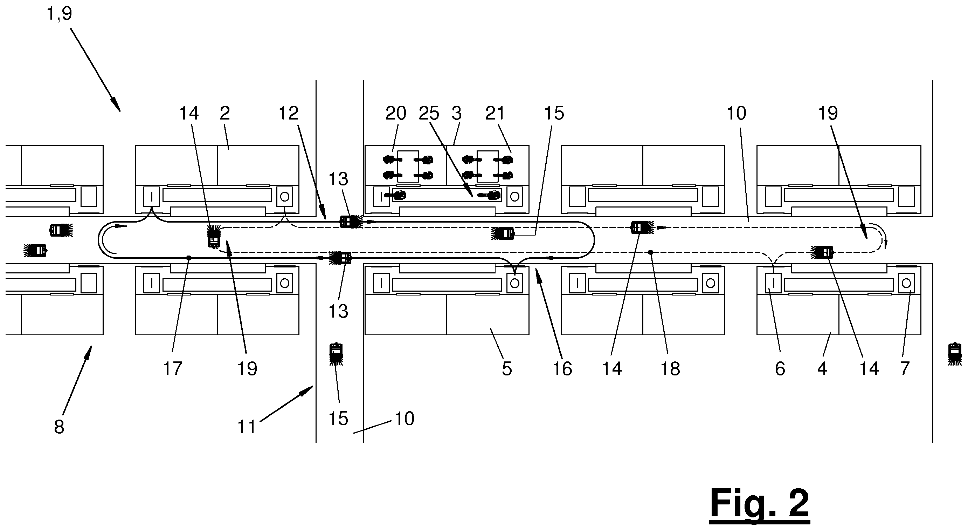

Das Transportsystem (9) weist einen oder mehrere Transportwege (10) auf, an welche jeweils mehrere Fertigungsstationen (2-5) und ggf. weitere Stationen, insbesondere die Bauteilversorgung (28), angeschlossen sind. In der gezeigten Ausführungsform sind die Transportwege (10) kreuzweise verbunden und bilden ein verzweigtes Transportwegenetz (11). Im Transportwegenetz (11) sind eine Vielzahl von einander z.B. rechtwinklig kreuzenden Transportwegen (10) vorhanden. Die Transportwege (10) verlaufen entlang und zwischen den Fertigungsstationen (2-5). Die Transportwege (10) sind in Figur 1 und 2 als bodenseitige Fahrstraßen ausgebildet. Die Fertigungsstationen (2-5) weisen jeweils mit ihrer Vorderseite zu einem Transportweg (10).

Die Fertigungsstationen (2-5) sind in einer Stationsmatrix (8) angeordnet und an das Transportwegenetz (11) angeschlossen. Die Stationsmatrix (8) kann wie in der gezeigten Ausführungsform regelmäßig ausgebildet sein. Sie kann auch eine unregelmäßige Form haben. Mehrere Fertigungsstationen (2-5) können in zwei parallelen Linien mit einander zugekehrten Rückseiten angeordnet sein und einen Stationsblock bilden, der außenseitig von Transportwegen (10) umgeben ist. Alternativ können die Fertigungsstationen (2-5) freistehend und allseitig von Transportwegen (10) umgeben sein.

Das Transportsystem (9) weist eine Transporteinrichtung (12) mit mehreren automatischen Transportmitteln (13,14,15) auf, die sich auf dem oder den Transportwegen (10) bewegen. Die automatischen Transportmittel (13,14,15) sind fahrerlos und bewegen sich programmgesteuert und ferngesteuert. Sie können einen eigenen Antrieb besitzen und individuell steuerbar sowie ggf. lenkbar sein. Sie haben eine geeignete Aufnahme- und Wechselvorrichtung für den Transport und die Übergabe von einem oder mehreren Werkstücken (29) oder ggf. auch einem oder mehreren Werkstückträgern.

Das Transportsystem (9) weist ein Transportliniensystem (16) auf, in dem die automatischen Transportmittel (13,14) liniengebunden verkehren. Das Transportliniensystem (16) beinhaltet vorgegebene Fahrtrouten, welche die automatischen Transportmittel (13,14) auf dem oder den Transportwegen (10) abfahren. Das Transportliniensystem (16) ist ähnlich wie ein öffentliches Nahverkehrsystem mit Omnibuslinien ausgebildet. Die Liniengebundenheit der Transportmittel (13,14) bedeutet, dass sich diese nur auf ihrer Linie bewegen und keine anderen Wege fahren. Das Transportsystem (9) kann darüber hinaus noch andere automatische Transportmittel (15) aufweisen, die sich außerhalb des Transportliniensystems (16) bewegen und keine Linienbindung haben.

Figur 2 verdeutlicht ausschnittsweise das Transportliniensystem (16). Es weist in der bevorzugten Ausführungsform mehrere ringförmig geschlossene Transportlinien (17,18) auf, auf denen jeweils ein automatisches Transportmittel (13,14) liniengebunden verkehrt. Es bewegt sich dabei vorzugsweise in einem Kreislauf entlang der jeweiligen Transportlinie (17,18) bzw. der hier vorgegebenen Fahrtroute auf dem oder den Transportwegen (10). Auf einer Transportlinie (17,18) können auch mehrere Transportmittel (13,14) verkehren.

Die Transportlinien (17,18) sind voneinander getrennt. In der bevorzugten Ausführungsform verkehren die automatischen Transportmittel (13,14) nur auf ihrer eigenen Transportlinie (17,18) und wechseln nicht in eine andere Transportlinie.

Die Transportlinien (17,18) sind selektiv an einzelne Fertigungsstationen (2-5) angeschlossen. Die Zahl der angeschlossenen Fertigungsstationen (2-5) beträgt vorzugsweise zwei. Sie kann aber auch größer sein. Durch die Linienaufteilung sind jeweils nur ein Teil der insgesamt vorhandenen Fertigungsstationen (2-5) an eine Transportlinie (17,18) angeschlossen. Die Transportlinien (17,18) erstrecken sich jeweils nur über einen Teilbereich des Transportwegenetzes (11).

Die an eine Transportlinie (17,18) angeschlossenen Fertigungsstationen (2-5) können gemäß Figur 2 einen größeren Abstand haben, wobei eine oder mehrere andere Stationen dazwischen liegen können. Die angeschlossenen Fertigungsstationen (2-5) können an den gleichen Transportweg (10) oder an unterschiedliche Transportwege (10) im Wegenetz (11) angebunden sein. In einer einfachen Variante können direkt benachbarte Fertigungsstationen (2-5) an eine gemeinsame Transportlinie (17,18) angeschlossen sein.

In Figur 2 sind an die Transportlinie (17) die Fertigungsstationen (2) und (5) angeschlossenen. Auf der Transportlinie (17) verkehren z.B. zwei automatische Transportmittel (13). Die andere Transportlinie (18) ist an die Fertigungsstationen (2) und (4) angeschlossen, wobei hier z.B. drei automatische Transportmittel (14) verkehren. Die Zahl der automatischen Transportmittel (13,14) auf einer Transportlinie (17,18) kann auch kleiner, z.B. eins, oder größer, z.B. vier, fünf oder mehr, sein. In Figur 2 sind der Übersicht halber nur zwei Transportlinien (17,18) dargestellt. Daneben gibt es viele weitere solcher Transportlinien.

Wie Figur 2 verdeutlicht, sind der oder die Transportwege (10) für einen Begegnungsverkehr von automatischen Transportmitteln (13,14,15) ausgebildet. Sie haben hierfür z.B. eine entsprechend große Breite. Die Fahrtrichtung kann vorgegeben sein, z.B. als Rechtsverkehr oder im Uhrzeigersinn.

Die Transportlinien (17,18) haben eine möglichst kurze Länge, um unnötige Fahrtstrecken zu vermeiden. Eine oder mehrere Transportlinien (17,18) können zu diesem Zweck auf einem Transportweg (10) eine Wendestelle (19) für ihr automatisches Transportmittel (13,14) aufweisen. Dies ist günstig, um Fertigungsstationen (2-5) bedienen zu können, die an unterschiedlichen Seiten eines Transportwegs (10) angeordnet sind. Figur 2 zeigt diese Situation. Mehrere zumindest bereichsweise parallel laufende Transportlinien (17,18) können auch eine gemeinsame Wendestelle (19) haben.

Die Transporteinrichtung (12) kann untereinander gleiche oder unterschiedliche automatische Transportmittel (13,14,15) aufweisen. Für diese ist außerdem jeweils eine geeignete programmierbare Steuerung vorgesehen. Eine solche Steuerung kann auch den einzelnen Transportlinien (17,18) zugeordnet sein und für die dort verkehrenden automatischen Transportmittel (13,14) vorgesehen und ausgebildet sein. Die Steuerbefehle, Statusmeldungen und sonstige Signale können auf unterschiedliche Weise, z.B. leitungsgebunden oder drahtlos, übertragen werden. Von den Fertigungsstationen (2-5) können Anforderungssignale für eine angeschlossene Transportlinie (17,18) und für ein dort verkehrendes Transportmittel (13,14) an die Steuerung(en) übermittelt werden. Die automatischen Transportmittel (13,14,15) können auch Erfassungseinrichtungen für drohende Kollisionen oder sonstige äußere Störungseinflüsse aufweisen und entsprechend reagieren. Zudem besitzen sie eine mitgeführte oder eine stationäre externe Energieversorgung, z.B. mittels elektrischer Schleifkontakte.

Ein automatisches Transportmittel (13,14,15) kann z.B. gemäß Figur 2 als flurgebundenes und selbstlenkendes Fahrzeug ausgebildet sein. Dieses kann formschlüssig per Schiene oder berührungslos, z.B. induktiv, über ein Kamerasystem oder auf andere Weise, geführt werden. Ein solches Fahrzeug kann z.B. als sog. FTF ausgebildet sein. Ein oder mehrere solcher FTF's können zusammen mit der Steuerung ein liniengebundenes, fahrerloses Transportsystem, sog. FTS, bilden.

Die verschiedenen Transportlinien (17,18) sind über gemeinsam angeschlossene Fertigungsstationen (2-5) miteinander für den Werkstück- oder Materialfluss verkettet. Auf der Transportlinie (17) wird z.B. ein Werkstück (29) von der Fertigungsstation (5) abgeholt und in die Fertigungsstation (2) gebracht, wobei das automatische Transportmittel (13) dann wieder zurück zur Fertigungsstation (5) fährt. Das bearbeitete Werkstück (29) wird von der Fertigungsstation (2) mit der anderen Transportlinie (18) abgeholt und zu der Fertigungsstation (4) gebracht.

Die Fertigungsstationen (2-5) weisen jeweils eine Schnittstelle (6,7) mit Transportlinienanschluss für die Werkstückübergabe zwischen der Fertigungsstation (2-5) und dem automatischen Transportmittel (13,14,15) auf. Dies kann eine einzelne und kombinative Schnittstelle sein, die sowohl für die Zuführung, wie für die Abfuhr von Werkstücken (29) vorgesehen und ausgebildet ist. Zwei oder mehr Transportlinien können dabei an die gleiche Schnittstelle angeschlossen sein.

In Figur 2 und 3 ist eine andere und bevorzugte Schnittstellengestaltung gezeigt. Hier sind eine Eingangsschnittstelle (6) für die Werkstückzufuhr und eine Ausgangsschnittstelle (7) für die Werkstückabgabe vorgesehen, die getrennt voneinander und mit gegenseitigem Abstand angeordnet sind. Sie sind an der Stationsfront entlang des dort vorbei führenden Transportwegs (10) nebeneinander angeordnet. Die Zahl der Schnittstellen (6,7) kann auch größer als zwei sein.

An die Schnittstellen (6,7) sind bei dieser Ausführungsform unterschiedliche Transportlinien (17,18) angeschlossen. An der Eingangsschnittstelle (6) der Fertigungsstation (2) ist z.B. die Transportlinie (17) und an der Ausgangsschnittstelle (7) die andere Transportlinie (18) angeschlossen. Sie haben eine entsprechend unterschiedliche Funktion für die Zuführung und Abfuhr von Werkstücken (29). In Figur 2 sind die Eingangsschnittstellen (6) mit einem "I" und die Ausgangsschnittstellen mit einem "0" gekennzeichnet.

Abweichend vom gezeigten Ausführungsbeispiel können an einer Eingangs- oder Ausgangsschnittstelle (6,7) auch jeweils mehrere Transportlinien angeschlossen sein, mit denen z.B. mehrere unterschiedliche Werkstücke (29) zur Bearbeitung in einer Fertigungsstation (2-5) zugeführt und wieder abgeführt werden.

Die Schnittstellen (6,7) weisen jeweils eine definierte Ablage für ein oder mehrere Werkstücke (29) auf, an denen die Übergabe an und von einem automatischen Transportmittel (13,14,15) und ggf. der internen Transportlogistik (25) erfolgen kann. Die besagte Werkstück-Wechselvorrichtung kann auch an einer Schnittstelle (6,7) angeordnet sein. Zur Werkstückübergabe fährt ein automatisches Transportmittel (13,14,15) zu der dort benachbarten Schnittstelle (6,7) und in eine definierte, übergabegerechte Position. Es kann dabei zur Verkehrsentlastung ggf. vom Transportweg (10) in die Fertigungsstation (2-5) hineinfahren und nach der Werkstückübergabe wieder heraus und zurück auf den Transportweg (10) fahren. Hierfür kann ein ggf. automatisch verschließbarer Zugang in einer außen umlaufenden Stationsumgrenzung (27), z.B. einem Zaun, vorhanden sein.

Die Fertigungsstationen (2-5) sind vorzugsweise modular ausgebildet und weisen jeweils eine oder mehrere integrierte Fertigungszellen (20,21) und eine interne Transportlogistik (25) auf, welche die Zelle(n) (20,21) und die Schnittstelle(n) (6,7) bedient. Figur 3 zeigt eine solche Fertigungsstation (2-5) in einer vergrößerten schematischen Darstellung.

Die eine oder mehreren Fertigungszellen (20,21) haben jeweils einen eigenen Prozessbereich (22) mit einer Aufnahmevorrichtung (23) für ein Werkstück (29) und mit mehreren daneben angeordneten Industrierobotern (24) zur Prozessbehandlung des aufgenommenen Werkstücks (29). Die Aufnahmevorrichtung (23) weist bevorzugt eine steuerbare Spanneinrichtung auf, mit der das einteilige oder mehrteilige Werkstück (29) prozessgerecht positioniert und gespannt werden kann.

Mittels evtl. vorhandener anderer automatischer Transportmittel (15) können weitere Bauteile über das Transportwegenetz (11) der Fertigungsstation (2-5) zugeführt und z.B. an einer zwischen den Schnittstellen (6,7) angeordneten Bereitstellung zur Aufnahme einzelner Bauteile oder Bauteilbehälter übergeben werden. Von hier können sie mit der internen Transportlogistik (25) übernommen und der oder den Zellen (20,21) zugeführt werden.

Die Prozessbereiche (22) sind untereinander im konstruktiven Grundaufbau der vorgenannten Komponenten einheitlich ausgebildet und standardisiert. Ferner können noch ein Steuer- und Versorgungsbereich in ebenfalls einheitlicher Grundausbildung und mit einer Basisprogrammierung, insbesondere auch einer Basis-Ablaufprogrammierung, hinzukommen. Diese sind der Übersicht halber in den Zeichnungen nicht dargestellt.

Die einzelne Fertigungsstation (2-5) kann dadurch prozessneutral in ihrer Hardware und in der Basisprogrammierung gestaltet sein. Die Prozessanpassung erfolgt durch Einsatz geeigneter und wechselbarer Prozesswerkzeuge, d.h. einem sogenannten Prozesstooling, und durch eine aufgesetzte Prozessprogrammierung. Die Fertigungsstationen (2-5) lassen sich dadurch schnell konfigurieren und auch bedarfsweise auf andere Prozesse bzw. auch andere Werkstücke (29) umrüsten.

Die interne Transportlogistik (25) weist z.B. einen oder mehrere Industrieroboter (26) auf, die als mehrachsige Handlingroboter ausgebildet sind und ggf. auf einer Fahrachse längs der aufgereiten Zellen (20,21) und parallel zu dem auf der anderen Seite vorbeiführenden Transportweg (10) angeordnet sind. Sie bewegen sich dabei auch zwischen den Schnittstellen (6,7) und können in einen Begegnungsverkehr einander ausweichen.

Abwandlungen der gezeigten und beschriebenen Ausführungsformen sind in verschiedener Weise möglich. Insbesondere können die Einzelmerkmale der Ausführungsmerkmale und ihrer Abwandlungen beliebig miteinander kombiniert, insbesondere auch vertauscht werden.

Die Fertigungsstation (2-5) können eine andere Ausbildung haben. Sie können z.B. ohne separate interne Transportlogistik (25) auskommen, insbesondere wenn sie nur eine Fertigungszelle aufweisen. Der oder die Prozessroboter (24) können Zuführ- und Abführfunktionen ausführen. Ferner können die Schnittstellen (6,7) zu einer gemeinsamen Schnittstelle zusammengelegt sein.

### BEZUGSZEICHENLISTE

- 1: Fertigungsanlage
- 2: Fertigungsstation
- 3: Fertigungsstation
- 4: Fertigungsstation
- 5: Fertigungsstation
- 6: Schnittstelle Eingang, I
- 7: Schnittstelle Ausgang, 0
- 8: Stationsmatrix
- 9: Transportsystem
- 10: Transportweg
- 11: Transportwegenetz
- 12: Transporteinrichtung
- 13: Transportmittel, FTS, EHB
- 14: Transportmittel, FTS, EHB
- 15: Transportmittel, FTS, EHB
- 16: Transportliniensystem
- 17: Transportlinie
- 18: Transportlinie
- 19: Wendestelle
- 20: Zelle, Fertigungszelle
- 21: Zelle, Fertigungszelle
- 22: Prozessbereich
- 23: Aufnahmevorrichtung
- 24: Industrieroboter, Prozessroboter
- 25: Transportlogistik intern, Zellenlogistik
- 26: Industrieroboter, Handlingroboter
- 27: Stationsumgrenzung
- 28: Bauteilversorgung
- 29: Werkstück

## Patentansprüche

1. Fertigungsanlage für Werkstücke, nämlich Karosserieteile, wobei die Fertigungsanlage (1) mehrere Fertigungsstationen (2-5) und ein Transportsystem (9) zum Transport der Karosserieteile innerhalb der Fertigungsanlage (1) und zwischen den Fertigungsstationen (2-5) aufweist, **dadurch gekennzeichnet, dass** das Transportsystem (9) ein Transportwegenetz (11) aus mehreren miteinander verbundenen und einander kreuzenden Transportwegen (10) und eine Transporteinrichtung (12) mit mehreren auf den Transportwegen (10) beweglichen automatischen Transportmitteln (13,14,15) aufweist, wobei die Transportwege (10) an mehrere, in einer Stationsmatrix (8) angeordnete Fertigungsstationen (2-5) angebunden sind und die Transportwege (10) als bodenseitige Fahrstraßen ausgebildet sind,
- wobei das Transportsystem (9) ein Transportliniensystem (16) aufweist, in dem die automatischen Transportmittel (13,14,15) liniengebunden auf Transportwegen (10) verkehren,
- wobei das Transportliniensystem (16) mehrere ringförmig geschlossene Transportlinien (17,18) aufweist, auf denen jeweils ein automatisches Transportmittel (13,14) liniengebunden und bevorzugt im Kreislauf verkehrt und
- die Transportlinien (17,18) selektiv an einzelne Fertigungsstationen (2-5) angeschlossen und jeweils über eine gemeinsam angeschlossene Fertigungsstation (2-5) miteinander verkettet sind.

2. Fertigungsanlage nach Anspruch 1, **dadurch gekennzeichnet, dass** die Fertigungsstationen (2-5) jeweils eine Schnittstelle (6,7) mit Transportlinienanschluss für die Werkstückübergabe zwischen der Fertigungsstation (2-5) und einem automatischen Transportmittel (13,14,15) aufweisen.

3. Fertigungsanlage nach Anspruch 2, **dadurch gekennzeichnet, dass** die Fertigungsstationen (2-5) jeweils eine oder mehrere integrierte Fertigungszellen (20,21) und eine interne Transportlogistik (25) aufweisen, welche die Zelle(n) (20,21) und die Schnittstelle(n) (6,7) bedient.

4. Fertigungsanlage nach einem der vorhergehenden Ansprüche, **dadurch gekennzeichnet, dass** die automatischen Transportmittel (13,14,15) fahrerlos, programmierbar und fernsteuerbar ausgebildet sind, wobei ein automatisches Transportmittel (13,14,15) als ein flurgebundenes selbstlenkendes Fahrzeug, insbesondere FTF, ausgebildet ist.

5. Fertigungsanlage nach Anspruch 4, **dadurch gekennzeichnet, dass** die automatischen Transportmittel (13,14,15) eine Aufnahme- und Wechselvorrichtung für den Transport und die Übergabe von einem oder mehreren Karosserieteilen (29) oder einem oder mehreren Werkstückträgern aufweisen.

6. Fertigungsanlage nach einem der Ansprüche 1 bis 5, **dadurch gekennzeichnet, dass** die Fertigungsstationen (2-5) untereinander und mit einer Bauteilversorgung (28) über das Transportliniensystem (16) prozesstechnische verkettet sind.

7. Verfahren zum Fertigen von Werkstücken (29), nämlich Karosserieteilen, wobei die Karosserieteile (29) in einer Fertigungsanlage (1) mit mehreren Fertigungsstationen (2-5) und einem Transportsystem (9) zum Transport der Karosserieteile innerhalb der Fertigungsanlage (1) und zwischen den Fertigungsstationen (2-5) gefertigt werden, **dadurch gekennzeichnet, dass** die Karosserieteile (29) mit einem Transportsystem (9) auf einem Transportwegenetz (11) aus mehreren miteinander verbundenen und einander kreuzenden Transportwegen (10) und mittels einer Transporteinrichtung (12) mit mehreren auf den Transportwegen (10) beweglichen automatischen Transportmitteln (13,14,15) transportiert werden, wobei die Transportwege (10) an mehrere, in einer Stationsmatrix (8) angeordnete Fertigungsstationen (2-5) angebunden sind und die Transportwege (10) als bodenseitige Fahrstraßen ausgebildet sind, wobei
- die automatischen Transportmittel (13,14,15) in einem Transportliniensystem (16) des Transportsystems (9) liniengebunden verkehren,
- wobei ein automatisches Transportmittel (13,14) in einer ringförmig geschlossenen Transportlinie (17,18) des Transportliniensystems (16) liniengebunden und bevorzugt im Kreislauf verkehrt,
- wobei die automatischen Transportmittel (13,14,15) auf ihrer Transportlinie (17,18) zu einzelnen, selektiv angeschlossenen Fertigungsstationen (2-5) fahren und
- wobei mehrere Fertigungsstationen (2-5) prozesstechnisch durch eine Transportlinie (17,18) verkettet werden.

8. Verfahren nach Anspruch 7, **dadurch gekennzeichnet, dass** mehrere Transportlinien (17,18) getrennt angeordnet und an einer gemeinsamen Fertigungsstation (2-5) verkettet werden.

9. Verfahren nach einem der Ansprüche 7 oder 8, **dadurch gekennzeichnet, dass** die Karosserieteile (29) mit automatischen Transportmitteln (13,14,15) fahrerlos, programmiert und ferngesteuert transportiert werden.

## Claims

1. Manufacturing installation for workpieces, namely vehicle body parts, wherein the manufacturing installation (1) comprises a plurality of manufacturing stations (2-5) and a transport system (9) for transporting the vehicle body parts within the manufacturing installation (1) and between the manufacturing stations (2-5), **characterized in that** the transport system (9) comprises a transport path network (11) made up of a plurality of interconnected and intersecting transport paths (10) and comprises a transport arrangement (12) having a plurality of automatic transport means (13, 14, 15) which can move along the transport paths (10), wherein the transport paths (10) are tied into a plurality of manufacturing stations (2-5) arranged in a station matrix (8), and the transport paths (10) are designed as floor traffic routes,
- wherein the transport system (9) comprises a transport line system (16) in which the automatic transport means (13, 14, 15) travel line-bound along transport paths (10),
- wherein the transport line system (16) comprises a plurality of annularly closed transport lines (17, 18) on each of which an automatic transport means (13, 14) travels line-bound and preferably in a circuit, and
- the transport lines (17, 18) are selectively connected to individual manufacturing stations (2-5) and in each case interlinked via a commonly connected manufacturing station (2-5).

2. Manufacturing installation according to Claim 1, **characterized in that** the manufacturing stations (2-5) each comprise an interface (6, 7) with transport line connection for workpiece transfer between the manufacturing station (2-5) and an automatic transport means (13, 14, 15).

3. Manufacturing installation according to Claim 2, **characterized in that** the manufacturing stations (2-5) each comprise one or more integrated manufacturing cells (20, 21) and internal transport logistics (25) which serves the cell(s) (20, 21) and the interface(s) (6, 7).

4. Manufacturing installation according to one of the preceding claims, **characterized in that** the automatic transport means (13, 14, 15) are designed to be driverless, programmable and remote-controllable, wherein an automatic transport means (13, 14, 15) is designed as a floor-bound self-guiding vehicle, in particular an AGV.

5. Manufacturing installation according to Claim 4, **characterized in that** the automatic transport means (13, 14, 15) comprise a receiving and changing device for transporting and transferring one or more vehicle body parts (29) or one or more workpiece carriers.

6. Manufacturing installation according to one of Claims 1 to 5, **characterized in that** the manufacturing stations (2-5) are interlinked in process terms with one another and with a component supply (28) via the transport line system (16).

7. Method for manufacturing workpieces (29), namely vehicle body parts, wherein the vehicle body parts (29) are manufactured in a manufacturing installation (1) having a plurality of manufacturing stations (2-5) and a transport system (9) for transporting the vehicle body parts within the manufacturing installation (1) and between the manufacturing stations (2-5), **characterized in that** the vehicle body parts (29) are transported with a transport system (9) on a transport path network (11) made up of a plurality of interconnected and intersecting transport paths (10) and by means of a transport arrangement (12) having a plurality of automatic transport means (13, 14, 15) which can move along the transport paths (10), wherein the transport paths (10) are tied into a plurality of manufacturing stations (2-5) arranged in a station matrix (8), and the transport paths (10) are designed as floor traffic routes, wherein
- the automatic transport means (13, 14, 15) travel line-bound in a transport line system (16) of the transport system (9),
- wherein an automatic transport means (13, 14) travels line-bound in an annularly closed transport line (17, 18) of the transport line system (16) and preferably in a circuit,
- wherein the automatic transport means (13, 14, 15) move on their transport line (17, 18) to individual, selectively connected manufacturing stations (2-5), and
- wherein a plurality of manufacturing stations (2-5) are interlinked in process terms by a transport line (17, 18).

8. Method according to Claim 7, **characterized in that** a plurality of transport lines (17, 18) are arranged separately and are interlinked at a common manufacturing station (2-5).

9. Method according to either of Claims 7 and 8, **characterized in that** the vehicle body parts (29) are transported by automatic transport means (13, 14, 15) in a driverless, programmed and remote-controlled manner.

## Revendications

1. Installation de fabrication de pièces, à savoir de parties de carrosserie, l'installation de fabrication (1) comprenant plusieurs postes de fabrication (2-5) et un système de transport (9) pour le transport des parties de carrosserie à l'intérieur de l'installation de fabrication (1) et entre les postes de fabrication (2-5), **caractérisée en ce que** le système de transport (9) comprend un réseau de voies de transport (11) constitué de plusieurs voies de transport (10) se croisant les unes des autres et reliées les unes aux autres et un dispositif de transport (12) doté de plusieurs moyens de transport (13, 14, 15) automatiques mobiles sur les voies de transport (10), les voies de transport (10) étant connectées à plusieurs postes de fabrication (2-5) disposés dans une matrice de postes (8) et les voies de transport (10) étant réalisées sous forme de voies de déplacement du côté du sol,
- le système de transport (9) comprenant un système de lignes de transport (16) dans lequel les moyens de transport automatiques (13, 14, 15) circulent sur des voies de transport (10) sur des lignes,
- le système de lignes de transport (16) comprenant plusieurs lignes de transport (17, 18) fermées de manière annulaire, sur lesquelles un moyen de transport automatique (13, 14) circule respectivement sur une ligne et de préférence en circuit fermé et
- les lignes de transport (17, 18) étant raccordées sélectivement à des postes de fabrication individuels (2-5) et étant interconnectées les unes aux autres respectivement par le biais d'un poste de fabrication (2-5) raccordé conjointement.

2. Installation de fabrication selon la revendication 1, **caractérisée en ce que** les postes de fabrication (2-5) comprennent respectivement une interface (6, 7) dotée d'un raccord de lignes de transport pour le transfert de pièces entre le poste de fabrication (2-5) et un moyen de transport automatique (13, 14, 15).

3. Installation de fabrication selon la revendication 2, **caractérisée en ce que** les postes de fabrication (2-5) comprennent respectivement une ou plusieurs cellules de fabrication intégrées (20, 21) et un système logistique interne (25), lequel dessert la/les cellule(s) (20, 21) et l'interface/les interfaces (6, 7).

4. Installation de fabrication selon l'une des revendications précédentes, **caractérisée en ce que** les moyens de transport automatiques (13, 14, 15) sont réalisés sans conducteur, de manière programmable et de manière commandable à distance, un moyen de transport automatique (13, 14, 15) étant réalisé sous la forme d'un véhicule au sol à auto-braquage, en particulier un véhicule de transport sans conducteur.

5. Installation de fabrication selon la revendication 4, **caractérisée en ce que** les moyens de transport automatiques (13, 14, 15) comprennent un dispositif de réception et d'échange pour le transport et le transfert d'une ou de plusieurs parties de carrosserie (29) ou d'un ou de plusieurs supports de pièce.

6. Installation de fabrication selon l'une des revendications 1 à 5, **caractérisée en ce que** les postes de fabrication (2-5) sont interconnectés les uns aux autres et à une alimentation en composants (28) par une technique des processus par le biais du système de lignes de transport (16).

7. Procédé de fabrication de pièces (29), à savoir de parties de carrosserie, les parties de carrosserie (29) étant fabriquées dans une installation de fabrication (1) comprenant plusieurs postes de fabrication (2-5) et un système de transport (9) pour le transport des parties de carrosserie à l'intérieur de l'installation de fabrication (1) et entre les postes de fabrication (2-5), **caractérisé en ce que** les parties de carrosserie (29) sont transportées à l'aide d'un système de transport (9) sur un réseau de voies de transport (11) constitué de plusieurs voies de transport (10) se croisant les unes les autres et reliées les unes aux autres et au moyen d'un dispositif de transport (12) doté de plusieurs moyens de transport (13, 14, 15) automatiques mobiles sur les voies de transport (10), les voies de transport (10) étant connectées à plusieurs postes de fabrication (2-5) disposés dans une matrice de postes (8) et les voies de transport (10) étant réalisées sous forme de voies de déplacement du côté du sol,
- les moyens de transport automatiques (13, 14, 15) circulant sur une ligne dans un système de lignes de transport (16) du système de transport (9),
- un moyen de transport automatique (13, 14) circulant sur une ligne et de préférence en circuit fermé dans une ligne de transport (17, 18) fermée de manière annulaire du système de lignes de transport (16),
- les moyens de transport automatiques (13, 14, 15) se déplaçant sur une ligne de transport (17, 18) vers des postes de fabrication individuels (2-5) raccordés sélectivement et
- plusieurs postes de fabrication (2-5) étant interconnectés par une technique des processus au moyen d'une ligne de transport (17, 18).

8. Procédé selon la revendication 7, **caractérisé en ce que** plusieurs lignes de transport (17, 18) sont disposées de manière séparée et sont interconnectées à un poste de fabrication commun (2-5).

9. Procédé selon l'une des revendications 7 ou 8, **caractérisé en ce que** les parties de carrosserie (29) sont transportées, à l'aide de moyens de transport automatiques (13, 14, 15), sans conducteur, de manière programmée et de manière commandée à distance.
